# DEMANDE DE BREVET EUROPEEN

(11) **EP 3 828 887 A1**
(43) Date de publication de la demande: **02.06.2021**
(21) Numéro de dépôt: 20207226.0
(22) Date de dépôt: 12.11.2020
(51) Int. Cl.: G10L 25/48, G06F 3/16, G06T 13/40, G10L 15/22

(54) **DISPOSITIF ET PROCEDE D ANALYSE ENVIRONNEMENTALE, ET DISPOSITIF ET PROCEDE D ASSISTANCE VOCALE LES IMPLEMENTANT**

(30) Priorité: 29.11.2019 FR 1913452
(71) Demandeur: ORANGE, 75015 Paris (FR)
(72) Inventeur: BELAUNDE, Mariano, 92326 CHÂTILLON CEDEX (FR); PELLEN, Nicolas, 92326 CHÂTILLON CEDEX (FR); ESNAULT, Régis, 92326 CHÂTILLON CEDEX (FR); GREGOIRE, Christian, 92326 CHÂTILLON CEDEX (FR)

(57) **Abrégé**

L'invention concerne un dispositif d'analyse environnementale, en particulier un objet analyseur de son. De manière plus générale, l'invention concerne l'assistance vocale.

Un objet de l'invention est un dispositif électronique d'analyse environnementale comportant :
+ un système de surveillance d'un environnement dans lequel le dispositif électronique d'analyse environnementale est placé et
+ un indicateur physique visuel contrôlé en fonction d'au moins un paramètre de commande fourni par le système de surveillance.

Ainsi, l'utilisateur du dispositif électronique peut percevoir l'objet d'attention du système de surveillance puisque le système de surveillance fait un retour au moyen d'indicateur(s) visuel(s) que le système de surveillance commande.

## Description

### Domaine technique

L'invention concerne un dispositif d'analyse environnementale, en particulier un objet analyseur de son. De manière plus générale, l'invention concerne l'assistance vocale.

### État de la technique

L'assistance vocale présente aujourd'hui sur nos smartphones, tablettes sous forme d'applications logicielles telles que l'Assistant Google™, Amazon Alexa™, Siri™, Djingo™... mais aussi disponibles sous forme d'objet dites enceintes vocales connectées, aussi nommées enceintes intelligentes (ou smartspeaker en anglais) ou assistants vocaux tels que Google Home™, Apple HomePod™, Amazon Echo™, Speaker Djingo™... est une interface homme machine via l'audio. Elle utilise un microphone pour écouter l'environnement afin de détecter la commande vocale d'activation de l'assistance vocale, puis, une fois activer, pour recevoir la commande vocale de l'utilisateur et la traiter.

Le problème est qu'actuellement, une certaine presse alerte les utilisateurs sur le fait que certains dispositifs mettant en oeuvre l'assistance vocale semble enregistrer plus d'informations que prévues et même les transmettre à des équipements de fourniture du service d'assistance vocale extérieure au réseau de communication domestique. Même si ces défauts ont été résolus et n'ont pas fait l'objet de vente au grand public selon d'autres, cela a renforcée la frilosité d'une partie du grand public à accepter l'assistance vocale. Afin de permettre un plus grand déploiement de ces enceintes connectées, celles-ci doivent être conçues afin d'augmenter la confiance dans le monde digital de la maison intelligente (SmartHome en anglais) tout en respectant la vie privée (privacy en anglais) bien que ces deux tendances soient parfois antagonistes avec les services rendus par ces nouvelles technologies.

Afin de respecter la vie privée, les réseaux de microphones des enceintes intelligentes pointent vers le locuteur ou, plus précisément, privilégient, grâce à la séparation des sources, une direction d'écoute. Puis ces enceintes intelligentes extraient un signal de parole du signal capté (notamment en séparant le signal de parole et le bruit ambiant ou brouhaha dans ce signal capté). Ainsi, la reconnaissance de parole reçoit un signal de meilleure qualité améliorant ses performances de reconnaissance.

Cependant ces traitements ne sont pas perceptibles par l'utilisateur. Il n'a conscience que l'enceinte intelligente est focalisée sur sa parole plutôt que celle du voisin car la réponse fournie par l'enceinte intelligente est a priori pertinente dans le dialogue volontairement initié par l'utilisateur avec l'enceinte intelligente.

Par contre, lorsqu'une première personne engage un dialogue avec une enceinte intelligente, mais que l'enceinte intelligente capte mieux une deuxième personne, le dialogue sera centré sur les propos de cette deuxième personne. Les deux personnes vont alors être troublées car la première personne n'aura pas sa réponse et la deuxième personne se rendra compte que l'enceinte intelligente l'écoutait alors qu'elle ne s'adressait pas à elle.

C'est pourquoi, actuellement, l'enceinte intelligente est perçue comme écoutant tout. Cette perception freine l'adoption et l'utilisation des enceintes intelligentes qui peuvent être utiles notamment pour optimiser l'utilisation de ressources domotiques. De manière plus générale, un microphone captant une ambiance pose un problème d'acceptation du système muni d'un tel microphone relativement à la protection de la privée.

### Exposé de l'invention

Un des buts de la présente invention est de remédier à des inconvénients/insuffisances de l'état de la technique/ d'apporter des améliorations par rapport à l'état de la technique.

Un objet de l'invention est un dispositif électronique d'analyse environnementale comportant :
+ un système de surveillance d'un environnement dans lequel le dispositif électronique d'analyse environnementale est placé et
+ un indicateur physique visuel contrôlé en fonction d'au moins un paramètre de commande fourni par le système de surveillance.

Ainsi, l'utilisateur du dispositif électronique peut percevoir l'objet d'attention du système de surveillance puisque le système de surveillance fait un retour au moyen d'indicateur(s) visuel(s) que le système de surveillance commande.

Avantageusement, l'indicateur physique visuel est un simulateur d'un élément facial d'un être vivant. Ainsi, les risques d'erreurs d'interprétation par l'utilisateur ou un dispositif tiers des données captées par le système de surveillance sont réduits car l'utilisateur est habitué à interpréter certains comportements faciaux. Le dispositif tiers est notamment un dispositif de vidéo surveillance du domicile dans lequel est placé le système de surveillance.

Avantageusement, l'indicateur physique visuel comporte un ensemble de dispositifs de restitution. Ainsi, certains des dispositifs de restitution pouvant être contrôlés de manière indépendante et/ou d'autres dispositifs de restitution pouvant être contrôlés de manière conjointe en fonction des mêmes données ou de données captées distinctes, les risques d'erreurs d'interprétation par l'utilisateur ou un dispositif tiers des données captées par le système de surveillance sont réduits.

Avantageusement, lorsque l'ensemble de dispositifs de restitution comporte plus d'un dispositif de restitution, les dispositifs de restitution de l'ensemble sont contrôlables conjointement en fonction du au moins un paramètre de commande fourni par le système de surveillance.

Ainsi, la commande simultanée de plusieurs paramètres permet de transmettre le degré de confiance du système de surveillance dans les données captées.

Avantageusement, les dispositifs de restitution sont constitués par au moins un des dispositifs parmi les suivants :
+ une diode ;
+ un afficheur matriciel ;
+ un écran ;
+ une partie mobile du dispositif électronique d'analyse environnementale.

Ainsi, l'interprétation par l'utilisateur ou un dispositif tiers des données captées par le système de surveillance sont plus ou moins précise suivant le ou les indicateurs physiques visuels utilisés.

Avantageusement, le système de surveillance comporte un capteur et un analyseur recevant des données captées du capteur et contrôlant l'indicateur physique visuel en lui transmettant au moins le paramètre de commande.

Ainsi, l'analyseur est apte à commander de manière plus ou moins fine l'indicateur physique visuel en fonction de sa capacité d'analyse : direction de focalisation de la surveillance, capacité de surveillance d'un ou plusieurs types de données captées (son, image, vidéo, vibrations...), capacité à distinguer le nombre de sources captées, le type de sources captées, le type d'interaction de la source captée...

Avantageusement, le système de surveillance comporte au moins un système parmi les suivants :
+ un système d'écoute ;
+ un système de surveillance vidéo
+ un système de surveillance tactile/haptique.

Avantageusement, le système d'écoute comporte au moins un dispositif parmi les suivants :
+ un microphone,
+ une carte de dérivation équipée d'au moins microphone.

Avantageusement, le système d'écoute comporte plusieurs microphones unitaires formant un réseau de microphones intégrés dans le dispositif d'analyse environnementale.

Ainsi, en fonction de la disposition du réseau et du placement du dispositif d'analyse environnemental dans un environnement donné, le dispositif d'analyse environnemental écoute une partie donnée ou la totalité de l'environnement.

Avantageusement, le dispositif électronique d'analyse environnementale comporte au moins un connecteur apte à permettre et la transmission d'une commande du dispositif électronique d'analyse environnementale à un dispositif électronique contrôlable, la commande étant fournie par le système de surveillance. Ainsi, le risque de commande intempestive ou de commande erronée d'un dispositif électronique contrôlable distant est réduit.

Un autre objet de l'invention est un procédé d'analyse environnementale mis en oeuvre par un dispositif électronique d'analyse environnementale comportant :
+ une surveillance d'un environnement dans lequel le dispositif électronique d'analyse environnementale est placé,
+ une restitution physique visuelle en fonction d'un paramètre de commande résultant de l'analyse des données capturées.

Avantageusement, le paramètre de commande est déterminé à partir d'une partie des données captées dans l'environnement, la partie des données captées étant relative à une source de données dans l'environnement.

Avantageusement, la surveillance comporte
+ une capture de données de l'environnement, et
+ une analyse des données capturées fournissant le paramètre de commande.

Avantageusement, le procédé d'analyse environnementale comporte une émission d'une notification à destination d'un terminal de communication, la notification étant générée en fonction du résultat de l'analyse des données capturées.

Un objet de l'invention est encore un assistant vocal connecté à un réseau de communication permettant de piloter au moins un service mis en oeuvre par un dispositif de communication du réseau de communication, l'enceinte vocale comportant :
+ un système de surveillance d'un environnement dans lequel l'assistant vocal est placé et
+ un indicateur physique visuel contrôlé en fonction d'au moins un paramètre de commande fourni par le système de surveillance.

Ainsi, non seulement l'acceptation par l'utilisateur d'un assistant vocal dans son environnement est augmentée car l'utilisateur perçoit les actions du système de surveillance, mais en outre cela limite les risques d'utilisation intempestive ou erronée de l'assistant vocal.

Un objet de l'invention est également un procédé d'assistance vocale mis en oeuvre par un terminal de communication connecté à un réseau de communication comportant un pilotage d'au moins un service mis en oeuvre par un dispositif de communication du réseau de communication distinct du terminal de communication, le procédé d'assistance vocale comportant :
+ une surveillance d'un environnement dans lequel le terminal de communication est placé,
+ une restitution physique visuelle en fonction d'un paramètre de commande résultant de l'analyse des données capturées.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'analyse environnemental et/ou d'un assistant vocal et étant conçus pour commander l'exécution des différentes étapes de ce procédé.

L'invention vise donc aussi un programme comprenant des instructions de code de programme pour l'exécution des étapes du procédé d'analyse environnementale et/ou du procédé d'assistance vocale lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

### Brève description des dessins

Les caractéristiques et avantages de l'invention apparaîtront plus clairement à la lecture de la description, faite à titre d'exemple, et des figures s'y rapportant qui représentent :
[Fig 1] Figure 1, un schéma simplifié d'un dispositif d'analyse environnemental selon l'invention,
[Fig 2] Figure 2, un schéma simplifié d'un procédé d'analyse environnemental selon l'invention,
[Fig 3] Figure 3, un schéma simplifié d'un mode de réalisation d'un dispositif d'analyse environnemental selon l'invention,
[Fig 4] Figure 4, un schéma simplifié d'une architecture de communication comportant un dispositif d'analyse environnemental selon l'invention,
[Fig 5] Figure 5, un schéma simplifié d'un dispositif d'analyse environnemental comportant un réseau de capteurs selon l'invention,
[Fig 6a] Figure 6a, un schéma simplifié d'un dispositif d'analyse environnemental dans un premier exemple d'état de surveillance selon l'invention,
[Fig 6b] Figure 6b, un schéma simplifié d'un dispositif d'analyse environnemental dans un deuxième exemple d'état de surveillance selon l'invention,
[Fig 6c] Figure 6c, un schéma simplifié d'un dispositif d'analyse environnemental dans un troisième exemple d'état de surveillance selon l'invention,
[Fig 6d] Figure 6d, un schéma simplifié d'un dispositif d'analyse environnemental dans un quatrième exemple d'état de surveillance et un premier exemple de résultat de surveillance selon l'invention, [Fig 6e] Figure 6d, un schéma simplifié d'un dispositif d'analyse environnemental dans un deuxième exemple de résultat de surveillance selon l'invention,
[Fig 6f] Figure 6f, un schéma simplifié d'un dispositif d'analyse environnemental dans un troisième exemple de résultat de surveillance selon l'invention,
[Fig 6g] Figure 6g, un schéma simplifié d'un dispositif d'analyse environnemental dans un exemple d'état du dispositif d'analyse selon l'invention,
[Fig 7] Figure 7, un schéma simplifié d'un assistant vocal selon l'invention,
[Fig 8] Figure 8, un schéma simplifié d'un procédé d'assistance vocale selon l'invention.

### Description des modes de réalisation

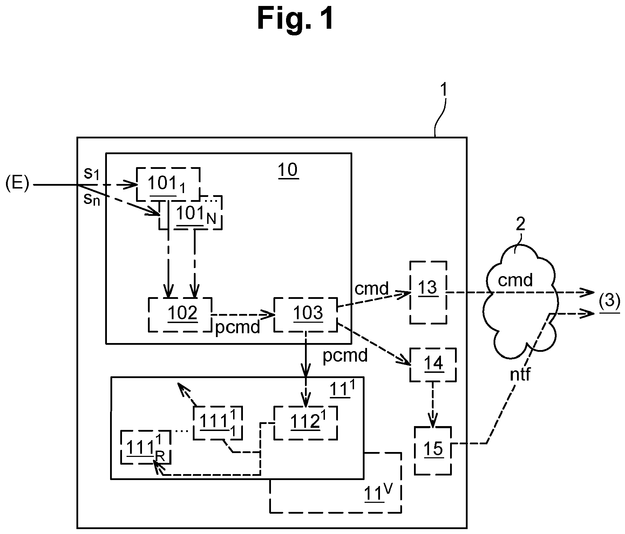

La figure 1 illustre un schéma simplifié d'un dispositif d'analyse environnemental selon l'invention.

Le dispositif électronique d'analyse environnementale 1 comporte :
+ un système de surveillance 10 d'un environnement E dans lequel le dispositif électronique d'analyse environnementale 1 est placé, et
+ un indicateur physique visuel 11¹,..., 11^{V} contrôlé en fonction d'au moins un paramètre de commande *pcmd* fourni par le système de surveillance 10.

L'indicateur physique visuel 11¹,...,11^{V} est une interface homme-machine qui indique notamment dans quelle direction le système de surveillance 10, notamment le(s) microphone(s) de ce système de surveillance 10, focalise sa surveillance, en particulier lorsqu'il perçoit/écoute la parole d'une personne, change de personne, détecte un évènement spécifique (notamment un son spécifique), détourne sa surveillance vers ce nouveau signal.

En particulier, l'indicateur physique visuel 11¹,...,11^{V} est un simulateur d'un élément facial d'un être vivant. Notamment, un simulateur d'un élément facial d'un animal, d'un humain ou d'un humanoïde, tel qu'un simulateur de regards, un simulateur d'expressions faciales, un simulateur de position d'une partie corporel d'un animal (oreilles, queue...). Le simulateur d'un élément facial d'un être vivant copie le mouvement, la position... de cet élément facial en fonction du contexte environnemental *cntxte,* par exemple fourni par le système de surveillance 10 dans le paramètre de commande *pcmd.*

En particulier, l'indicateur physique visuel 11¹,...,11^{V} comporte au moins un dispositif de restitution 111¹₁...111¹_{R} et un contrôleur 112¹. Le contrôleur 112¹ utilisant le paramètre de commande *cmd* pour déclencher un état d'un ou plusieurs des dispositifs de restitution 111¹₁...111¹_{R}. Par exemple, l'état est sélectionné par le contrôleur 112¹ dans une liste d'états possibles du dispositif de restitution 111¹₁...111¹_{R}. Dans un autre exemple, suivant le type de dispositif de dispositif de restitution, l'état désigne un comportement déterminé par l'indicateur physique visuel 11¹,....11^{V} en fonction du contexte environnemental *cntxte* lorsque l'indicateur physique visuel 11¹,...,11^{V} est un simulateur d'un élément facial. Notamment, lorsque le dispositif de restitution est une led, l'état peut être un niveau d'intensité lumineuse, une couleur... Si le dispositif de restitution est un mini-écran noir et blanc simulant un œil, l'état peut être une forme de pupille : ronde, fendue, fermé et/ou une position : droite, gauche, haut, bas...

En particulier, l'indicateur physique visuel 11¹ comporte un ensemble de dispositifs de restitution {111¹₁...111¹_{R}}. Notamment, les dispositifs de restitution 111¹₁...111¹_{R} sont identiques tels qu'un même type d'écran ou de partie motorisée... par exemple pour reproduire respectivement les deux yeux, les deux oreilles... ou distincts pour reproduire différents éléments de la face d'un être vivant : œil, oreille, etc.

En particulier, lorsque l'ensemble de dispositifs de restitution {111¹₁...111¹_{R}} comporte plus d'un dispositif de restitution 111¹₁...111¹_{R}, les dispositifs de restitution de l'ensemble {111¹₁...111¹_{R}} sont contrôlables conjointement en fonction du au moins un paramètre de commande *pcmd* fourni par le système de surveillance. Par exemple, les deux écrans simulant les yeux et/ou les deux parties motorisées simulant les oreilles sont contrôlés conjointement pour indiquer une direction (les deux yeux et/ou les deux oreilles pointent dans une direction unique, un doute, une réflexion...

En particulier, les dispositifs de restitution sont constitués par au moins un des dispositifs parmi les suivants :
+ une diode ;
+ un afficheur matriciel ;
+ un écran ;
+ une partie mobile du dispositif électronique d'analyse environnementale.

La partie mobile du dispositif électronique d'analyse environnementale simule notamment une oreille, une queue... La mobilité de la partie est contrôlable notamment au moyen d'un moteur. La mobilité est par exemple une mobilité en rotation, et/ou une mobilité angulaire (l'oreille formant un angle de 0 à 180° avec une surface latérale du dispositif d'analyse environnementale).

En particulier, le système de surveillance 10 comporte un capteur 101₁...101_{N} et un analyseur 102 recevant des données captées dc₁...dc_{N} du capteur 101₁...101_{N} et contrôlant l'indicateur physique visuel 11¹...11^{V} en lui transmettant au moins le paramètre de commande *pcmd.*

En particulier, le système de surveillance 10 comporte au moins un système parmi les suivants :
+ un système d'écoute ;
+ un système de surveillance vidéo
+ un système de surveillance tactile et/ou haptique.

Par système d'écoute est entendu un système apte à surveiller l'environnement sonore : parole(s) et/ou son(s), tels que des sons émis par des objets électronique ou non : son des clefs sur une table, son d'ouverture/fermeture de fenêtre, sonnerie de fin de cuisson, son du lave-vaisselle en marche, eau qui bout...

Par système de surveillance vidéo est entendu un système apte à surveiller la présence d'une personne, d'un appareil dans l'environnement (permettant notamment une identification et un positionnement dans l'environnement de la personne et/ou appareil).

Par système de surveillance tactile est entendu un système apte à surveiller les contacts avec le dispositif d'analyse environnementale. Notamment, le dispositif électronique d'analyse environnementale comporte au moins une surface tactile et/ou est composé d'une surface externe tactile sur la totalité ou une partie de l'objet : par exemple la partie supérieure et/ou la (ou les) partie(s) latérale(s) et/ou la partie antérieure et/ou, dans le cas où le dispositif électronique d'analyse environnementale est posé sur une surface horizontale, la partie postérieure et/ou et, dans le cas où l'objet est apposé contre une surface verticale, la partie inférieure. Ainsi, le système de surveillance tactile détecte le contact d'une personne avec le dispositif électronique d'analyse environnementale et/ou la position de la personne par rapport à ce dispositif d'analyse environnementale.

Par système de surveillance haptique est entendu un système apte à surveiller les vibrations, les mouvements. Notamment, le dispositif électronique d'analyse environnementale est doté de capteurs de vibrations et/ou de mouvement tels que des accéléromètres apte à détecter :
+ un objet, un appareil ou une personne mis en contact avec la surface horizontale sur laquelle le dispositif électronique d'analyse environnementale est posé ;
+ un mouvement ou une vibration de la surface verticale sur laquelle le dispositif électronique d'analyse environnementale est posé, tel que le mouvement de la porte sur laquelle il est apposé (ouverture/fermeture frigo, congélateur), mais aussi la vibration du mur sur lequel il est apposé (ouverture/fermeture de la porte et/ou fenêtre de ce mur) ;
+ un courant d'air engendré par une ouverture/fermeture de porte/fenêtre ; etc.

En particulier, le système d'écoute 10 comporte au moins un dispositif parmi les suivants :
+ un microphone,
+ une carte de dérivation équipée d'au moins microphone.

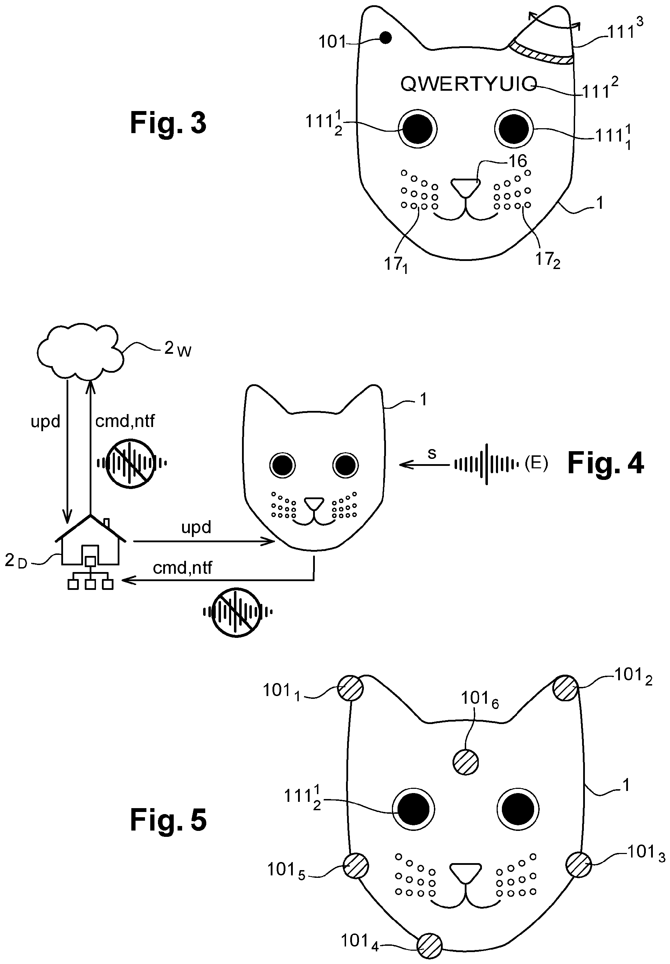

En particulier, le système d'écoute 10 comporte plusieurs microphones unitaires formant un réseau de microphones intégrés dans le dispositif électronique d'analyse environnementale 1 (comme l'illustre notamment la figure 5.

En particulier, le dispositif électronique d'analyse environnementale 1 comporte au moins un connecteur 13 apte à permettre la transmission d'une commande *cmd* du dispositif électronique d'analyse environnementale 1 à un dispositif électronique contrôlable 3. La commande *cmd* est fournie par le système de surveillance 10.

En particulier, le dispositif électronique d'analyse environnementale 1 comporte au moins un générateur de notification 14 apte à générer en fonction de paramètre de commande une notification *ntf* et un transmetteur 15 apte à émettre la notification générée *ntf* du dispositif électronique d'analyse environnementale 1 à un dispositif électronique contrôlable 3.

Un dispositif électronique d'analyse environnementale 1 est placé dans un environnement donné E, par exemple un espace intérieur tel qu'une pièce d'une maison, d'un appartement, d'un immeuble de bureau, un garage, une zone d'un hangar, d'une usine, etc., un espace extérieur tel qu'une terrasse, une zone de parking, un espace comportant une piscine...

Le système de surveillance 10 surveille cet en environnement E grâce à différents signaux s₁...sO émis par celui-ci : signaux sonores, signaux lumineux, vibrations, signaux tactiles...

Notamment, le système de surveillance comporte un ou plusieurs capteur 101₁...101_{N} captant une partie de ces signaux : signaux d'un seul type (capteurs sonores ou capteurs vidéo/image ou capteurs haptique...) ou de différents types (capteurs sonores et/ou capteurs vidéo/image et/ou capteurs haptique...) fournissant à partie de ces signaux s₁...s_{O} des données captées dc₁...dc_{N}.

En particulier, le système de surveillance comporte un analyseur 102 apte à déterminer en fonction des signaux environnementaux s₁...s_{O} un ou plusieurs paramètres de contextes environnementaux. Notamment, l'analyseur 102 identifie en fonction des signaux environnementaux s₁...sO un nombre de sources de signaux (source de signaux sonores et/ou visuels et/ou haptiques), et/ou détermine une position d'une ou plusieurs des sources de signaux, et/ou une intensité d'une ou plusieurs des sources de signaux.

Eventuellement, l'analyseur 102 comporte un ou plusieurs analyseurs élémentaires (non illustré) effectuent une analyse des signaux d'un même type (signal sonore ou signal vidéo ou signal haptique...). En particulier, l'analyseur 102 comporte un agrégateur (non illustré) pour intégrer plusieurs voire la totalité des données captées dc₁...dc_{N} d'un même type (sonore, vidéo ou haptique) pour effectuer un traitement ou plusieurs traitements.

L'analyseur 102 comporte notamment un identificateur et/ou localisateur de sources de signaux (non illustré) recevant les données captées dc₁...dc_{N}, notamment les données captées d'un type données, ou les données captées de plusieurs type de donnée, ou les données captées agrégées fournies par l'agrégateur de l'analyseur 102. Eventuellement, l'analyseur 102 comporte un extracteur de données captées par sources (non illustré) qui fournit un signal correspondant aux données captées provenant d'une source donnée (par exemple une source identifiée). L'extracteur de données captées par sources aussi nommé séparateur de sources peut être couplé avec la reconnaissance vocale pour reconnaitre différente sources humaines et/ou couplé à un détecteur de sons spécifiques qui reconnait la sémantique d'un son et/ou qui compare un son à des sons classés dans une base de sons (ouverture/fermeture porte, bip de four, démarrage/arrêt de machines identifiées : lave-linge, lave-vaisselle, micro-onde..., différents bruits d'eau : robinet, douche, bout, chasse..., bris de glace, aboiement...).

L'identificateur et/ou localisateur de sources est placé notamment en aval de l'extracteur par sources. En outre, l'analyseur 102 comporte un détecteur de contexte environnemental (non illustré) apte à identifier une action d'une source : ouverture/fermeture de porte, bip de fin de cuisson d'un four micro-onde, commande vocale d'un utilisateur, etc.

En particulier, le système de surveillance 10 comporte un contrôleur 103 qui est apte à contrôler au moins un indicateur physique visuel en déterminant un ou plusieurs paramètres de commande *pcmd* d'un ou plusieurs indicateurs physiques visuels 11¹,.... 11^{V} en fonction du contexte environnemental détecté, et/ou de la source identifiée et/ou de la position de la source identifiée, etc. Eventuellement, le contrôleur 103 est aussi apte à contrôler un dispositif distant 3 via un réseau de communication 2 au moyen d'une commande *cmd* déterminée en fonction du contexte environnemental détecté, et/ou de la source identifiée et/ou de la position de la source identifiée, etc.

En particulier, un terminal de communication, tel qu'un smartphone ou une tablette, implémentant par exemple un assistant vocal implémente le dispositif d'analyse environnemental selon l'invention. Dans ce cas, l'indicateur physique visuel est notamment une partie de l'écran du terminal de communication. Eventuellement, cette partie de l'écran simule la face d'un être vivant.

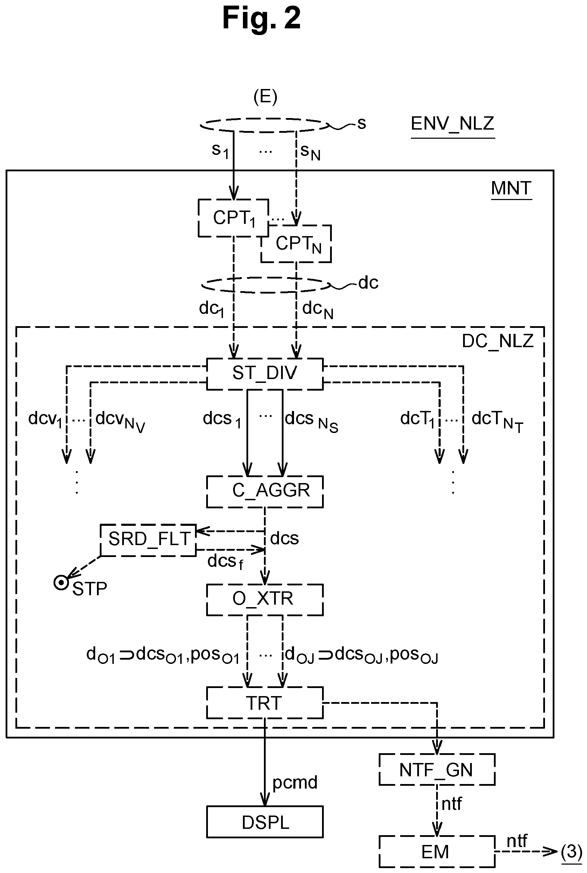

La figure 2 illustre un schéma simplifié d'un procédé d'analyse environnemental selon l'invention.

Le procédé d'analyse environnementale ENV_NLZ mis en oeuvre par un dispositif électronique d'analyse environnementale 1 comporte :
+ une surveillance MNT d'un environnement E dans lequel le dispositif électronique d'analyse environnementale 1 est placé,
+ une restitution physique visuelle DSPL en fonction d'un paramètre de commande *pcmd* résultant de la surveillance de l'environnement MNT.

En particulier, le paramètre de commande *pcmd* est déterminé à partir d'une partie des données captées d_{O1}...d_{OJ} dans l'environnement E, la partie des données captées d_{O1}...d_{OJ} étant relative à une source O₁...O_{J} de données dans l'environnement E.

En particulier, la surveillance MNT comporte
+ une capture de données de l'environnement CPT₁...CPT_{N}, et
+ une analyse DC_NLZ des données capturées dc₁...dc_{N} fournissant le paramètre de commande *pcmd.*

En particulier, le procédé d'analyse environnementale ENV_NLZ comporte une émission EM d'une notification *ntf* à destination d'un terminal de communication 3, la notification *ntf* étant générée en fonction du résultat de l'analyse des données capturées DC_NLZ.

En particulier, un environnement E comporte plusieurs sources de signaux O₁...O_{J}. Les signaux s₁... s_{N} sont, notamment, reçus par les captures CPT₁...CPT_{N} qui fournissent des données captées dc₁...dc_{N}. Eventuellement, une analyse des données captées DC_NLZ traite les données captées fournies par les captures CPT₁...CPT_{N}.

En particulier, l'analyse des données captées DC_NLZ comporte un séparateur des données captées ST_DIV en fonction du type de données : sonore dcs₁...dcs_{Ns}, vidéo dcv₁...dcv_{Nv}, haptique dct₁...dct_{Nt}, etc.

Eventuellement, l'analyse des données captées DC_NLZ comporte une agrégation de données captées C_AGGR, notamment par type de données captées comme illustrée par la figure 2. L'agrégation C_AGGR fournie des données captées agrégées, par exemple des données sonores agrégées des comme le montre la figure 2.

En particulier, l'analyse des données captées DC_NLZ comporte un filtrage du bruit ambiant SRD_FLT fournit les données captées filtrées correspondant aux données captées desquelles ont été retirées les données correspondant au bruit ambiant. Eventuellement, si la surveillance MNT n'a reçu que du bruit ambiant à un instant t, le filtrage du bruit ambiant SRD_FLT ne fournira aucune données captées filtrées pour cet instant et stoppera STP l'analyse de ces données captées à l'instant t DC_NLZ jusqu'aux données captées à l'instant suivant t+1.

En particulier, l'analyse des données captées DC_NLZ comporte une extraction de données par source O_XTR. L'extraction des données O_XTR par sources est opérée soit directement sur l'ensemble des données captées dc = {dc₁...dc_{N}}, soit sur l'ensemble des données captées d'un type donnée dcv= {dcv₁...dcv_{Nv}}, dcs= {dcs₁...dcs_{Ns}}, dct= {dct₁...dct_{Nt}}. L'extraction de données O_XTR fournit des données par sources d_{O1}...d_{OJ} dont des données captées dcs_{O1}...dcs_{OJ} provenant d'une source spécifique et, éventuellement, la (ou les positions) de la (ou des) source(s) pos_{O1}...pos_{OJ}.

En particulier, l'analyse des données captées DC_NLZ comporte un traitement TRT tel qu'une détection de contexte environnementale apte à identifier une action d'une source : ouverture/fermeture de porte, bip de fin de cuisson d'un four micro-onde, commande vocale d'un utilisateur, etc.

En particulier, le traitement TRT permet de déterminer un ou plusieurs paramètres de commande *pcmd* d'une restitution physique visuelle DSPL en fonction du contexte environnemental détecté, et/ou de la source identifiée et/ou de la position de la source identifiée, etc. Eventuellement, le traitement est aussi apte à déterminer une commande d'un dispositif distant 3 via un réseau de communication 2 en fonction du contexte environnemental détecté, et/ou de la source identifiée et/ou de la position de la source identifiée, etc.

En particulier, l'analyse environnementale ENV_NLZ comporte au moins une génération de notification NTF_GN apte à générer en fonction de paramètre de commande une notification *ntf* et une émission EM apte à émettre la notification générée *ntf* du dispositif électronique d'analyse environnementale 1 à un dispositif électronique contrôlable 3.

Dans un mode de réalisation particulier, le procédé d'analyse environnementale ENV_NLZ est implémenté sous la forme d'un programme comprenant des instructions de code de programme pour l'exécution des étapes du procédé d'analyse environnementale lorsque ledit programme est exécuté par un processeur.

La figure 3 illustre un schéma simplifié d'un mode de réalisation d'un dispositif d'analyse environnemental selon l'invention.

Le dispositif d'analyse environnemental 1 a la forme d'une face de chat. Il comporte au moins un capteur sonore 101 et plusieurs indicateurs physiques visuels dont deux mini-écrans 111¹₂ et 111¹₁ permettant de simuler des yeux, au moins une partie mobile 111³ permettant de simuler une oreille, un écran matriciel 111². L'écran matriciel 111² permet notamment d'afficher un mot d'une longueur donnée.

Dans le cas où le dispositif 1 est aussi une enceinte intelligente ou enceinte connectée, il comporte en outre au moins un haut-parleur 17₁, 17₂, et éventuellement un bouton 16 permettant de commander le dispositif d'analyse environnementale et/ou l'enceinte intelligente, tel qu'un bouton de marche/arrêt.

La figure 4 illustre un schéma simplifié d'une architecture de communication comportant un dispositif d'analyse environnemental selon l'invention.

Le dispositif d'analyse environnementale 1 est placé, voire situé, dans un environnement E qu'il surveille, notamment en captant les signaux s. Eventuellement, le dispositif d'analyse environnementale 1 est connecté à un réseau local 2D et/ou à un réseau distant 2W. Ainsi, le dispositif d'analyse environnementale 1 commande *cmd* ou notifie *ntf* un dispositif du réseau local ou d'un dispositif distant (non illustré). Notamment, les notifications *ntf* déclenchent l'accès à des services extérieurs (envoi de sms, accès Internet ou à un dispositif de communication du réseau domestique 2D...)

Eventuellement, cette connexion à un réseau 2D ou 2W permet une mise à jour *upd* du dispositif d'analyse environnementale 1. Les commandes de mises à jour *upd* peuvent être reçue directement du réseau de communication distant 2W ou préalablement reçue par un dispositif de communication du réseau de communication local 2D puis chargées sur le dispositif d'analyse environnementale 1.

Seules les commandes ou notifications sortent du réseau local 2D, les signaux s ne sont pas transmis sur le réseau distant 2W.

La figure 5 illustre un schéma simplifié d'un dispositif d'analyse environnemental comportant un réseau de capteurs selon l'invention.

Afin de couvrir la totalité de l'environnement E dans lequel est placé le dispositif d'analyse environnemental 1 comporte un réseau de capteurs 101₁...101₆. En particulier, le réseau de capteurs est un réseau de microphones.

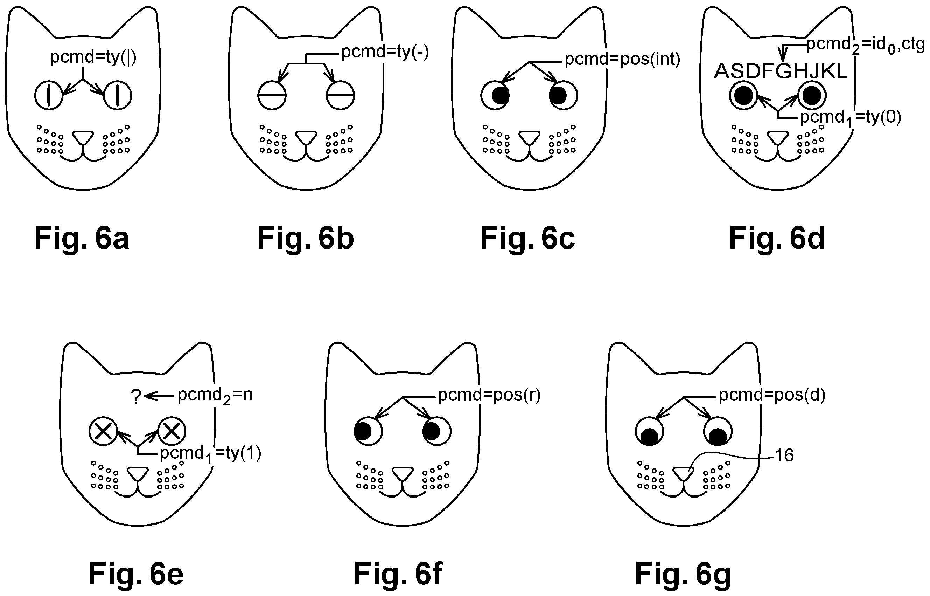

La figure 6a illustre un schéma simplifié d'un dispositif d'analyse environnemental dans un premier exemple d'état de surveillance selon l'invention.

Dans ce premier exemple d'état de surveillance, l'analyseur 102 du système de surveillance 10 détecte un son spécifique, ce qui correspond à un état du système de surveillance nommé « son détecté ». Le système de surveillance 10 commande en conséquence l'indicateur physique visuel pour simuler une attitude faciale correspondant à l'entente d'un son : en l'occurrence en transmettant un paramètre de commande pour simuler un œil avec une pupille fendue, notamment en indiquant dans le paramètre de commande le type d'œil simulé *pcmd=ty(l).*

La figure 6b illustre un schéma simplifié d'un dispositif d'analyse environnemental dans un deuxième exemple d'état de surveillance selon l'invention.

Dans ce deuxième exemple d'état de surveillance, le système de surveillance 10 est en veille ou en sommeil, c'est-à-dire qu'il est à l'écoute de l'environnement dans lequel le dispositif d'analyse environnemental est placé. Notamment, il capte les sons ambiants dans l'attente d'un son à analyser. Le système de surveillance 10 commande en conséquence l'indicateur physique visuel pour simuler une attitude faciale correspondant à cet état de veille: en l'occurrence en transmettant un paramètre de commande pour simuler un œil fermé, notamment en indiquant dans le paramètre de commande le type d'œil simulé *pcmd=ty(-).*

La figure 6c illustre un schéma simplifié d'un dispositif d'analyse environnemental dans un troisième exemple d'état de surveillance selon l'invention.

Dans ce troisième exemple d'état de surveillance, l'analyseur 102 du système de surveillance 10 identifie le type de son détecté, ce qui correspond à un état du système de surveillance nommé « son en cours d'analyse». Le système de surveillance 10 commande en conséquence l'indicateur physique visuel pour simuler une attitude faciale correspondant à l'identification/l'analyse d'un son : en l'occurrence en transmettant un paramètre de commande pour simuler un œil avec une pupille ronde tournant en sens inverse ou tournée vers l'intérieure, notamment en indiquant dans le paramètre de commande le type d'œil simulé *pcmd=ty(int)*.

La figure 6d illustre un schéma simplifié d'un dispositif d'analyse environnemental dans un quatrième exemple d'état de surveillance et un premier exemple de résultat de surveillance selon l'invention.

Dans ce quatrième exemple d'état de surveillance, l'analyseur 102 du système de surveillance 10 identifie le son détecté (en identifiant sa source et/ou sa catégorie (ouverture/fermeture, bip, pluie, etc.), ce qui correspond à un état du système de surveillance et un premier exemple de résultat nommé «son identifié». Le système de surveillance 10 commande en conséquence l'indicateur physique visuel pour simuler une attitude faciale correspondant à une connaissance du son détecté car identifié: en l'occurrence en transmettant un paramètre de commande pour simuler un œil avec une pupille ronde, notamment en indiquant dans le paramètre de commande le type d'œil simulé *pcmd₁=ty(o).*

Eventuellement, si le dispositif d'analyse environnement 1 comporte un écran matriciel, commande en conséquence l'indicateur physique visuel pour restituer cette identification: en l'occurrence en transmettant un paramètre de commande fonction d'une source du son identifié ou une catégorie du son identifié, respectivement *pcmd₂=id_{O}* ou *pcmd₂=ctg.*

La figure 6e illustre un schéma simplifié d'un dispositif d'analyse environnemental dans un deuxième exemple de résultat de surveillance selon l'invention.

Dans ce deuxième exemple de résultat, l'analyseur 102 du système de surveillance 10 n'identifie pas d'information concernant le son détecté (ni identification, ni catégorie, ni position...), ce qui correspond à un deuxième exemple de résultat nommé « incompréhension». Le système de surveillance 10 commande en conséquence l'indicateur physique visuel pour simuler une attitude faciale correspondant à l'incompréhension d'un son : en l'occurrence en transmettant un paramètre de commande pour simuler un œil avec une pupille en croix, notamment en indiquant dans le paramètre de commande le type d'œil simulé *pcmd=ty(x).*

La figure 6f illustre un schéma simplifié d'un dispositif d'analyse environnemental dans un troisième exemple de résultat de surveillance selon l'invention.

Dans ce troisième exemple de résultat, l'analyseur 102 du système de surveillance 10 identifie la position de la source du son détecté, ce qui correspond à un troisième exemple de résultat nommé «direction de la source sonore ». Le système de surveillance 10 commande en conséquence l'indicateur physique visuel pour simuler une attitude faciale correspondant à un son entendu dans une direction donnée: en l'occurrence en transmettant un paramètre de commande pour simuler un œil dirigé vers cette source, notamment en indiquant dans le paramètre de commande la position de la pupille dans l'œil simulé *pcmd=pos(r).*

La figure 6f peut aussi illustrer un schéma simplifié d'un dispositif d'analyse environnemental dans un exemple de direction de focalisation de la surveillance selon l'invention.

Dans cet exemple de direction de surveillance, l'analyseur 102 du système de surveillance 10 identifie la direction dans laquelle le système de surveillance focalise son écoute. Le système de surveillance 10 commande en conséquence l'indicateur physique visuel pour simuler une attitude faciale correspondant à la direction donnée de surveillance: en l'occurrence en transmettant un paramètre de commande pour simuler un œil dirigé dans la même direction que la surveillance, notamment en indiquant dans le paramètre de commande la position de la pupille dans l'œil simulé *pcmd=pos(r).*

Eventuellement pour distinguer la direction de surveillance de la direction de son surveillé, le paramètre de commande commandera une même position de l'œil simulé mais avec une forme différente suivant l'action di dispositif d'analyse : surveillance, son détecté. Par exemple, l'œil simulé sera reproduit sous forme d'un œil fendu vertical dans le cas d'une surveillance et d'un œil simulé sous forme de pupille ronde dans le cas d'un son détecté

La figure 6g illustre un schéma simplifié d'un dispositif d'analyse environnemental dans un exemple d'état du dispositif d'analyse selon l'invention.

Dans cet exemple d'état du dispositif d'analyse, le dispositif d'analyse environnemental est en train de s'activer notamment suite à l'appui par l'utilisateur sur un bouton 16 de marche/arrêt ou à une commande d'activation vocale, etc. Le système de surveillance 10 commande en conséquence l'indicateur physique visuel pour simuler une attitude faciale correspondant à un réveil: en l'occurrence en transmettant un paramètre de commande pour simuler un œil dirigé vers le bas, notamment en indiquant dans le paramètre de commande la position de la pupille dans l'œil simulé *pcmd=pos(d).*

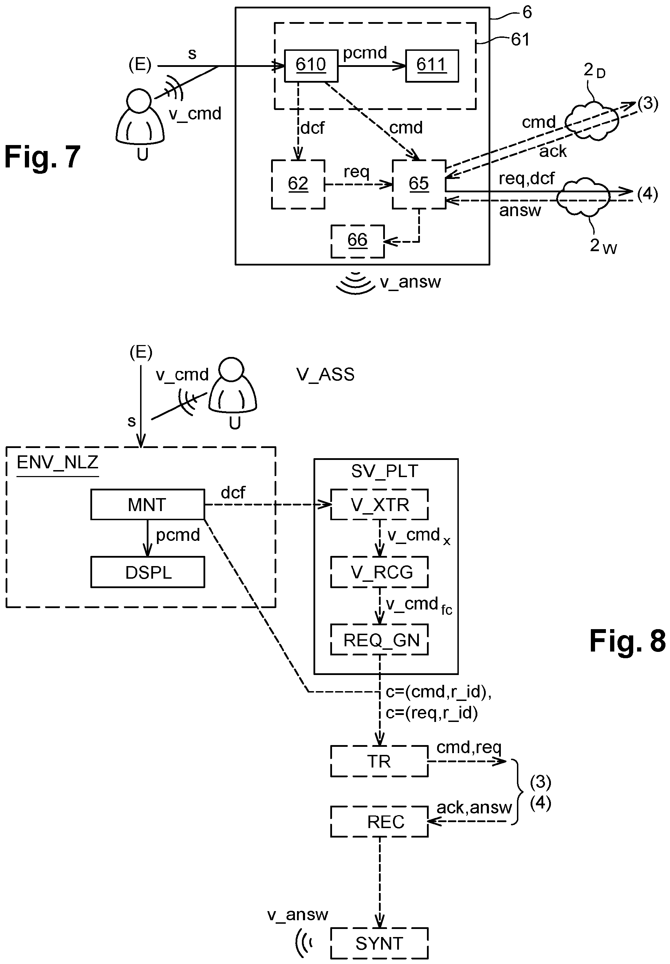

Les figures 6a à 6g illustre un dispositif d'analyse environnementale 1 simulant la face d'un chat. De manière générale, il peut simuler la face de n'importe quel animal, être humain ou être virtuel. le dispositif d'analyse environnementale 1 fonctionne alors de manière analogue au comportant de cet être vivant : l'indicateur physique visuel simulant un ou des yeux simule la focalisation du regard sur la personne qui parle; s'il y a plusieurs interlocuteurs dans l'environnement E, l'indicateur physique visuel simulant un ou des yeux simule le regard passant de l'un à l'autre en fonction du tour de parole. ; si un bruit/un nouveau son survient, l'indicateur physique visuel simulant un ou des yeux simule le regard qui se détourne vers ce bruit. L'interface 11 indique la focalisation mise en oeuvre par le système de surveillance 10 sur une source spécifique sonore ou autre, humaine ou autre... analysé par le système de surveillance 10 et/ou traité par le système de surveillance pour commander un dispositif tiers 3 et/ou faisant l'objet d'une requête par un assistant vocal 6 (cf. figure 7) implémentant le système de surveillance 11, 611. L'interface 11 matérialise cette focalisation qui indique aux utilisateurs présents dans l'environnement E la source faisant l'objet d'un traitement par le système de surveillance 11 et/ou l'assistant vocal 6 même si le système de surveillance continue à surveiller l'ensemble de l'environnement E. Cette tâche de surveillance (ou veille sonore dans le cas d'une surveillance sonore) est bien comprise par les humains comme étant une tâche d'alerte n'impliquant pas de compréhension/d'identification des différentes sources sonores parallèles à la source sur laquelle le dispositif d'analyse environnemental 1 et/ou l'assistant vocal est focalisé. Ainsi, les utilisateurs ne perçoivent que la machine : le dispositif d'analyse environnemental 1 et/ou l'assistant vocal 6 n'écoute pas « tout » ce qui devait améliorer la confiance et l'acceptation de ces dispositifs, en particulier l'enceinte intelligente.

La figure 7 illustre un schéma simplifié d'un assistant vocal selon l'invention.

Un assistant vocal 6 connecté à un réseau de communication 2W permettant de piloter au moins un service mis en oeuvre par un dispositif de communication 4 du réseau de communication, l'enceinte vocale comportant :
+ un système de surveillance 610 d'un environnement E dans lequel l'assistant vocal 6 est placé et
+ un indicateur physique visuel 611 contrôlé en fonction d'au moins un paramètre de commande *pcmd* fourni par le système de surveillance 610.

En particulier, l'assistant vocal 6 comporte un dispositif d'analyse environnemental 61 implémentant le système de surveillance 610 et l'indicateur physique visuel 611.

Ainsi, lorsqu'un utilisateur U présent dans l'environnement E adresse une commande vocale *v_cmd* à l'assistant vocal 6. Le système de surveillance 610 capte cette commande vocale v_cmd avec les sons ambiants de l'environnement E dans un signal sonore s et commande l'indicateur physique visuel 611 pour simuler une attitude faciale d'identification de la source, notamment en dirigeant des yeux simulés par cet indicateur physique visuel 611 vers l'utilisateur U lorsque le système de surveillance 610 identifie la position d'une source de commande vocale dans le signal reçu s.

En parallèle, l'assistant vocal traite la commande vocale identifiée dans le signal reçu s. En particulier, le système de surveillance 610 transmet les données captées filtrées dcf correspondant à la commande vocale identifiée dans le signal reçu s à un générateur de requête 62. Le générateur de requête 62 intègre dans une requête à destination d'un dispositif de communication 4, notamment un dispositif de fourniture de service, la commande identifiée soit directement (en intégrant la commande sous forme vocale) ou indirectement en intégrant une commande fonction de la commande vocale identifiée (notamment en effectuant une reconnaissance vocale sur la commande vocale reçue et éventuellement en convertissant la commande reconnue en langage naturelle en commande textuel formatée en fonction du langage de la requête).

En particulier, l'assistant vocal 6 comporte un transmetteur 65 émettant la commande identifiée à destination d'un dispositif de communication 4, notamment un dispositif de fourniture de service, soit directement la commande fournie *dcf* par le système de surveillance 610, soit une requête req générée par un générateur de requête 62 et comportant la commande identifiée *dcf*.

En particulier, le dispositif de communication 4 envoie une réponse *answ* à la requête *req, dcf.* Le transmetteur 65 reçoit cette réponse answ et la transmet à un dispositif de restitution 66. Notamment, le dispositif de restitution 66 est un dispositif de restitution vocal. Dans ce cas, soit la réponse émise *answ* par le dispositif de communication 4 comporte une réponse sous forme vocale, soit le dispositif de restitution 66 comporte un synthétiseur vocal (non illustré) mettant sous forme vocal la réponse answ reçue avant de la restituer. En particulier, le dispositif de restitution vocal 66 comporte un ou plusieurs haut-parleurs tels que les haut-parleurs 17₁ et 17₂ du dispositif d'analyse environnemental 1 de la figure 3.

Eventuellement, le système de surveillance 610 commande *cmd* en parallèle un dispositif de communication 3 d'un réseau local 2D comme illustré sur la figure 7 ou d'un réseau distant 2W. Le dispositif de communication 3 est notamment un dispositif de communication d'une installation domotique (centrale de commande, volet, système de fermeture fenêtre/porte, chauffage, éclairage, etc.), un dispositif de communication d'une installation multimédia (télévision connectée, décodeur TV, enregistreur, etc.), un objet connecté, etc.

En résumé, le(s) microphone(s) du système de surveillance 610 capte une ambiance s et donne, au moyen de l'invention, un retour aux personnes présentes dans l'environnement E dont l'utilisateur U pour expliquer ce qu'il entend/écoute ce qui n'était pas le cas jusqu'à présent des assistants vocaux.

Ainsi, le dialogue entre l'utilisateur et l'assistant vocal 6 est renforcé par l'ajout de la modalité d'analyse environnemental réalisée par le système de surveillance 610 combiné avec l'indicateur physique visuel 611. L'utilisation avec l'indicateur physique 611 simulant une face d'un être vivant d'une interaction morphique réduit encore l'inconfort d'interaction avec une machine : l'assistant vocal 6.

La figure 8 illustre un schéma simplifié d'un procédé d'assistance vocale selon l'invention.

Un procédé d'assistance vocale V_ASS mis en oeuvre par un terminal de communication connecté à un réseau de communication comporte un pilotage SV_PLT d'au moins un service mis en oeuvre par un dispositif de communication du réseau de communication distinct du terminal de communication, le procédé d'assistance vocale comportant :
+ une surveillance MNT d'un environnement E dans lequel le terminal de communication est placé,
+ une restitution physique visuelle DSPL en fonction d'un paramètre de commande *pcmd* résultant de l'analyse des données capturées.

En particulier, le procédé d'assistance vocal V_ASS comporte une analyse environnementale ENV_NLZ mettant en oeuvre la surveillance MNT et la restitution physique visuelle DSPL.

Ainsi, lorsqu'un utilisateur U présent dans l'environnement E adresse une commande vocale *v_cmd* à l'assistance vocale V_ASS. La surveillance MNT capte cette commande vocale v_cmd avec les sons ambiants de l'environnement E dans un signal sonore s et commande la restitution physique visuelle DSPL pour simuler une attitude faciale d'identification de la source.

En parallèle, l'assistance vocale V_ASS traite la commande vocale identifiée dans le signal reçu s. En particulier, la surveillance MNT transmet les données captées filtrées dcf correspondant à la commande vocale identifiée dans le signal reçu s à une génération de requête REQ_GN. La génération de requête REQ_GN intègre dans une requête à destination d'un dispositif de communication 4, notamment un dispositif de fourniture de service, la commande identifiée soit directement (en intégrant la commande sous forme vocale) ou indirectement en intégrant une commande fonction de la commande vocale identifiée (notamment en effectuant une reconnaissance vocale sur la commande vocale reçue et éventuellement en convertissant la commande reconnue en langage naturelle en commande textuel formatée en fonction du langage de la requête).

En particulier, le pilotage de service SV_PLT comporte une extraction de la commande vocale V_XTR des données captées filtrées *dcf* la comportant. Eventuellement, le pilotage de service SV_PLT comporte une reconnaissance vocale V_RCG convertissant la commande vocale en commande textuelle en langage naturel.

En particulier, l'assistance vocale V_ASS comporte une transmission TR émettant la commande identifiée c à destination d'un dispositif de communication 4, notamment un dispositif de fourniture de service, soit directement la commande fournie *dcf* par la surveillance MNT ou la commande extraite *v_cmdₓ,* ou la commande reconnue v_cmd_{c}, soit une requête req générée par une génération de requête REQ_GN et comportant la commande identifiée *dcf* ou la commande extraite *v_cmdₓ,* ou la commande reconnue v_cmd_{c}.

En particulier, le dispositif de communication 4 envoie une réponse *answ* à la requête *req*. La réception REC reçoit cette réponse answ et la fournit à une restitution SYNT. Notamment, la restitution SYNT est une restitution vocale. Dans ce cas, soit la réponse émise *answ* par le dispositif de communication 4 comporte une réponse sous forme vocale, soit la restitution comporte une synthèse vocale (non illustré) mettant sous forme vocal la réponse answ reçue avant de la restituer.

Eventuellement, la surveillance MNT commande *cmd* en parallèle un dispositif de communication 3 d'un réseau de communication. Le cas échéant, le dispositif de communication 3 peut émettre en retour un accusé réception de la commande ou un accusé d'exécution de la commande *ack.* La réception REC reçoit cette accusé *ack* et le fournit à une restitution SYNT. Dans le cas où la restitution est une restitution vocale, soit l'accusé émis *ack* par le dispositif de communication 3 est sous forme vocale, soit la restitution comporte une synthèse vocale (non illustré) mettant sous forme vocal l'accusé *ack* reçue avant de la restituer.

Dans un mode de réalisation particulier, le procédé d'analyse environnementale ENV_NLZ est implémenté sous la forme d'un programme comprenant des instructions de code de programme pour l'exécution des étapes du procédé d'assistance vocale lorsque ledit programme est exécuté par un processeur.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

## Revendications

1. Dispositif électronique d'analyse environnementale comportant :
+ un système de surveillance d'un environnement dans lequel le dispositif électronique d'analyse environnementale est placé et
+ un indicateur physique visuel contrôlé en fonction d'au moins un paramètre de commande fourni par le système de surveillance.

2. Dispositif électronique d'analyse environnementale selon la revendication précédente, **caractérisé en ce que** le paramètre de commande est fonction d'au moins un paramètre de capacité d'analyse du système de surveillance.

3. Dispositif électronique d'analyse environnementale selon l'une quelconque des revendications précédentes, **caractérisé en ce que** l'indicateur physique visuel est un simulateur d'un élément facial d'un être vivant.

4. Dispositif électronique d'analyse environnementale selon l'une quelconque des revendications précédentes, **caractérisé en ce que** l'indicateur physique visuel comporte un ensemble de dispositifs de restitution.

5. Dispositif électronique d'analyse environnementale selon la revendication précédente, **caractérisé en ce que**, lorsque l'ensemble de dispositifs de restitution comporte plus d'un dispositif de restitution, les dispositifs de restitution de l'ensemble sont contrôlables conjointement en fonction du au moins un paramètre de commande fourni par le système de surveillance.

6. Dispositif électronique d'analyse environnementale selon l'une quelconque des revendications précédentes, **caractérisé en ce que** le système de surveillance comporte un capteur et un analyseur recevant des données captées du capteur et contrôlant l'indicateur physique visuel en lui transmettant au moins le paramètre de commande.

7. Dispositif électronique d'analyse environnementale selon l'une quelconque des revendications précédentes, **caractérisé en ce que** le système de surveillance comporte au moins un système parmi les suivants :
+ un système d'écoute ;
+ un système de surveillance vidéo
+ un système de surveillance tactile/haptique.

8. Dispositif électronique d'analyse environnementale selon la revendication précédente, **caractérisé en ce que** le système d'écoute comporte plusieurs microphones unitaires formant un réseau de microphones intégrés dans le dispositif d'analyse environnementale.

9. Dispositif électronique d'analyse environnementale selon l'une quelconque des revendications précédentes, **caractérisé en ce que** le dispositif électronique d'analyse environnementale comporte au moins un connecteur apte à permettre et la transmission d'une commande du dispositif électronique d'analyse environnementale à un dispositif électronique contrôlable, la commande étant fournie par le système de surveillance.

10. Procédé d'analyse environnementale mis en oeuvre par un dispositif électronique d'analyse environnementale comportant :
+ une surveillance d'un environnement dans lequel le dispositif électronique d'analyse environnementale est placé,
+ une restitution physique visuelle en fonction d'un paramètre de commande résultant de la surveillance de l'environnement.

11. Procédé d'analyse environnementale selon la revendication précédente, **caractérisé en ce que** le paramètre de commande est déterminé à partir d'une partie des données captées dans l'environnement, la partie des données captées étant relative à une source de données dans l'environnement.

12. Procédé d'analyse environnementale selon l'une quelconque des revendications 9 ou 10, **caractérisé en ce que** la surveillance comporte
+ une capture de données de l'environnement, et
+ une analyse des données capturées fournissant le paramètre de commande.

13. Procédé d'analyse environnementale selon l'une quelconque des revendications 9 à 11, **caractérisé en ce que** le procédé d'analyse environnementale comporte une émission d'une notification à destination d'un terminal de communication, la notification étant générée en fonction du résultat de l'analyse des données capturées.

14. Assistant vocal connecté à un réseau de communication permettant de piloter au moins un service mis en oeuvre par un dispositif de communication du réseau de communication, l'enceinte vocale comportant :
+ un système de surveillance d'un environnement dans lequel l'assistant vocal est placé et
+ un indicateur physique visuel contrôlé en fonction d'au moins un paramètre de commande fourni par le système de surveillance.

15. Procédé d'assistance vocale mis en oeuvre par un terminal de communication connecté à un réseau de communication comportant un pilotage d'au moins un service mis en oeuvre par un dispositif de communication du réseau de communication distinct du terminal de communication, le procédé d'assistance vocale comportant :
+ une surveillance d'un environnement dans lequel le terminal de communication est placé,
+ une restitution physique visuelle en fonction d'un paramètre de commande résultant de l'analyse des données capturées.

16. Programme comprenant des instructions de code de programme pour l'exécution des étapes du procédé d'analyse environnementale selon l'une quelconque des revendications 9 à 12 et/ou du procédé d'assistance vocale selon la revendication 14 lorsque ledit programme est exécuté par un processeur.
